(19) Europäisches Patentamt

European Patent Office

Office européen des brevets

(11) **EP 2 731 317 A1**

(12) **EUROPEAN PATENT APPLICATION**

(43) Date of publication:
**14.05.2014 Bulletin 2014/20**

(51) Int Cl.:
***H04M 1/2745*** (2006.01)

(21) Application number: **12192482.3**

(22) Date of filing: **13.11.2012**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b></td><td>(72) Inventor: <b>Adams, Neil Patrick<br>Waterloo, Ontario N2L 3W8 (CA)</b></td></tr>
<tr><td>(71) Applicant: <b>BlackBerry Limited<br>Waterloo, ON N2K 0A7 (CA)</b></td><td>(74) Representative: <b>Bryn-Jacobsen, Caelia et al<br>Kilburn & Strode LLP<br>Electronics<br>20 Red Lion Street<br>London WC1R 4PJ (GB)</b></td></tr>
</table>

(54) **Speed dial phone entry pad**

(57) A method and electronic device for presenting a speed-dial contact on a display of the electronic device by rendering a photo associated with the contact on a keypad to enable speed-dial selection of the contact.

EP 2 731 317 A1

**Description**

**FIELD OF THE DISCLOSURE**

The present disclosure relates generally to a communications method and mobile communications device, and more particularly, to a speed dial phone entry pad User Interface (UI) rendered on a display of the mobile device.

**BACKGROUND**

Typical mobile communications devices, such as smart phones, tablets and the like, are configured for voice and data communications over networks, and to execute a variety of applications in such regard. These applications may include, but are not limited to, the following functions: phone, media player, mapping, calendar, email, instant messaging (IM), text messaging (e.g., for sending and receiving short message service (SMS)/multimedia message (MMS) messages), among others. Navigation between the various features and applications of handheld electronic devices is typically implemented via one or more graphical user interfaces (GUIs) having icon menus. Any feature, operation, command, function or application can be represented by an icon in the icon menu.

In order to enhance the overall user experience, it is desirable to provide a new expedient for identifying stored speed dial call recipients on a GUI.

**BRIEF DESCRIPTION OF THE DRAWINGS**

Fig. 1 is a block diagram illustrating a communication system including a mobile communication device to which example embodiments of the present disclosure can be applied;

Fig. 2 is a block diagram illustrating a mobile communication device in accordance with one example embodiment of the present disclosure;

Fig. 3 is a schematic of an illustrative caller UI configured in accordance with aspects of the present disclosure; and

Fig. 4 is a flow diagram of an exemplary process in accordance with aspects of the present disclosure.

**DETAILED DESCRIPTION**

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

The embodiments described herein generally relate to portable electronic devices. Examples of portable electronic devices include mobile (wireless) communication devices such as pagers, cellular phones, Global Positioning System (GPS) navigation devices and other satellite navigation devices, smartphones, wireless organizers, personal digital assistants and wireless-enabled notebook computers. At least some of these portable electronic devices may be handheld electronic devices. The portable electronic device may be a portable electronic device without wireless communication capabilities such as a handheld electronic game device, digital photograph album, digital camera and video recorder such as a camcorder. The portable electronic devices could have a touchscreen display, a mechanical keyboard in addition to a touchscreen display, or a conventional non-touchscreen display with a mechanical keyboard. These examples are intended to be non-limiting.

In accordance with an aspect of the disclosure, there is provided a method and electronic communications device for presenting a speed-dial contact on a display of the electronic device by rendering a photo associated with the contact on a keypad for speed-dial selection for the contact.

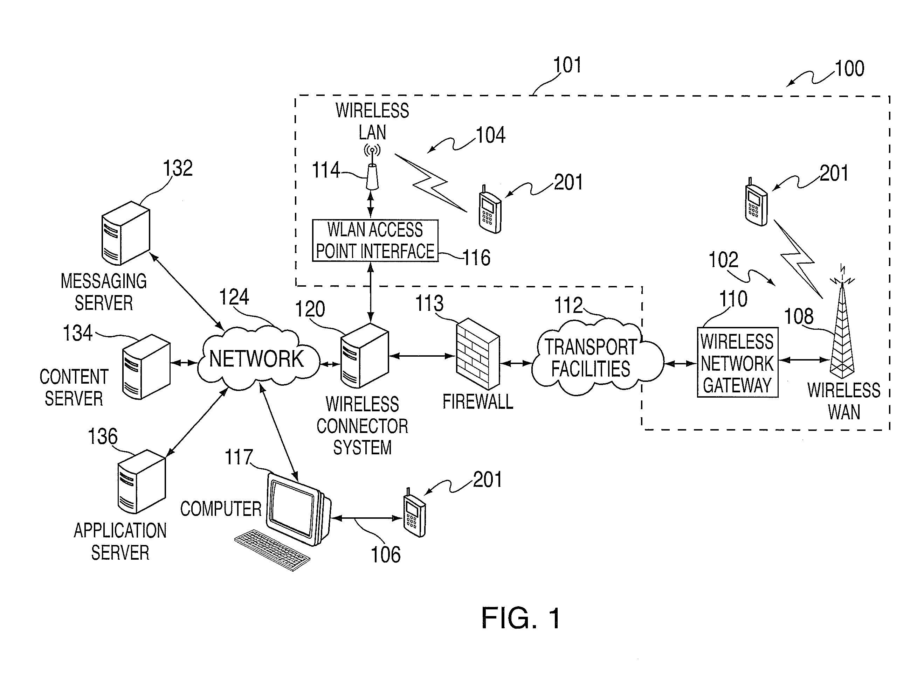

In order to facilitate an understanding of one possible environment for implementing illustrative embodiments of the disclosure, reference is made to FIG. 1, which depicts a block diagram of an exemplary communication system 100. The communication system 100 comprises a plurality of mobile communication devices 201 which may be networked within system 100. In this regard, several instances of mobile communication devices 201 are depicted in FIG. 1 employing different network connections within system 100. Mobile communication devices 201 are connected to a wireless network 101 which may comprise one or more of a Wireless Wide Area Network (WWAN) 201 and a Wireless Local Area Network (WLAN) 104 or other suitable network arrangements. In some embodiments, the mobile communication devices 201 are configured to communicate over both the WWAN 201 and WLAN 104, and to roam between these networks. In some embodiments, the wireless network 101 may comprise multiple WWANs 201 and WLANs 104.

The WWAN 201 may be implemented as any suitable wireless access network technology. By way of example, but not limitation, the WWAN 201 may be implemented as a wireless network that includes a number of transceiver base stations 108 (one of which is shown in FIG. 1) where each of the base stations 108 provides wireless Radio Frequency (RF) coverage to a corresponding area or cell. The WWAN 201 is typically operated by a mobile network service provider that provides subscription packages to users of the mobile communication devices 201. In some embodiments, the WWAN 201 conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN 201 is described as a "Wide-Area" network, that term is intended herein also to incorporate wireless Metropolitan Area Networks (WMAN) and other similar technologies for providing coordinated service wirelessly over an area larger than that covered by typical WLANs.

The WWAN 201 may further comprise a wireless network gateway 110 which connects the mobile communication devices 201 to transport facilities 112, and through the transport facilities 112 to a wireless connector system 120. Transport facilities may include one or more private networks or lines, the public Internet, a virtual private network, or any other suitable network. The wireless connector system 120 may be operated, for example, by an organization or enterprise such as a corporation, university, or governmental department, which allows access to a network 124 such as an internal or enterprise network and its resources, or the wireless connector system 120 may be operated by a mobile network provider. In some embodiments, the network 124 may be realised using the Internet rather than an internal or enterprise network.

The wireless network gateway 110 provides an interface between the wireless connector system 120 and the WWAN 201, which facilitates communication between the mobile communication devices 201 and other devices (not shown) connected, directly or indirectly, to the WWAN 201. Accordingly, communications sent via the mobile communication devices 201 are transported via the WWAN 201 and the wireless network gateway 110 through transport facilities 112 to the wireless connector system 120. Communications sent from the wireless connector system 120 are received by the wireless network gateway 110 and transported via the WWAN 201 to the mobile communication devices 201.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in FIG. 1) that collectively provide a WLAN coverage area.

The WLAN 104 comprises a wireless network which, in some embodiments, conforms to IEEE 802.11x standards (sometimes referred to as Wi-Fi) such as, for example, the IEEE 802.11a, 802.11b and/or 802.11g standard. Other communication protocols may be used for the WLAN 104 in other embodiments such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN 104 includes one or more wireless RF Access Points (AP) 114 (one of which is shown in FIG. 1) that collectively provide a WLAN coverage area.

The WLAN 104 may be a personal network of the user, an enterprise network, or a hotspot offered by an Internet service provider (ISP), a mobile network provider, or a property owner in a public or semi-public area, for example. The access points 114 are connected to an access point (AP) interface 116 which may connect to the wireless connector system 120 directly (for example, if the access point 114 is part of an enterprise WLAN 104 in which the wireless connector system 120 resides), or indirectly as indicated by the dashed line if FIG. 1 via the transport facilities 112 if the access point 14 is a personal Wi-Fi network or Wi-Fi hotspot (in which case a mechanism for securely connecting to the wireless connector system 120, such as a virtual private network (VPN), may be required). The AP interface 116 provides translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email communications, to and from a set of managed mobile communication devices 201. The wireless connector system 120 also provides administrative control and management capabilities over users and mobile communication devices 201 which may connect to the wireless connector system 120.

The wireless connector system 120 allows the mobile communication devices 201 to access the network 124 and connected resources and services such as a messaging server 132 (for example, a Microsoft Exchange™, IBM Lotus Domino™, or Novell GroupWise™ email server), and a content server 134 for providing content such as Internet content or content from an organization's internal servers, and application servers 136 for implementing server-based applications such as instant messaging (IM) applications to mobile communication devices 201.

The wireless connector system 120 typically provides a secure exchange of data (e.g., email messages, personal information manager (PIM) data, and IM data) with the mobile communication devices 201. In some embodiments, communications between the wireless connector system 120 and the mobile communication devices 201 are encrypted. In some embodiments, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some embodiments, the private encryption key is stored only in the user's mailbox on the messaging server 132 and on the mobile communication device 201, and can typically be regenerated by the user on mobile communication devices 201. Data sent to the mobile communication devices 201 is encrypted by the wireless connector system 120 using the private encryption key retrieved from the user's mailbox. The encrypted data, when received on the mobile communication devices 201, is decrypted using the private encryption key stored in memory. Similarly, data sent to the wireless connector system 120 from the mobile communication devices 201 is encrypted using the private encryption key stored in the memory of the mobile communication device 201. The encrypted data, when received on the wireless connector system 120, is decrypted using the private encryption key retrieved from the user's mailbox.

The wireless network gateway 110 is adapted to send data packets received from the mobile communication device 201 over the WWAN 201 to the wireless connector system 120. The wireless connector system 120 then sends the data packets to the appropriate connection point such as the messaging server 132, content server 134 or application servers 136. Conversely, the wireless connector system 120 sends data packets received, for example, from the messaging server 132, content server 134 or application servers 136 to the wireless network gateway 110 which then transmit the data packets to the destination mobile communication device 201. The AP interfaces 116 of the WLAN 104 provide similar sending functions between the mobile communication device 201, the wireless connector system 120 and network connection point such as the messaging server 132, content server 134 and application server 136.

The network 124 may comprise a private local area network, metropolitan area network, wide area network, the public Internet or combinations thereof and may include virtual networks constructed using any of these, alone, or in combination.

A mobile communication device 201 may alternatively connect to the wireless connector system 120 using a computer 117, such as desktop or notebook computer, via the network 124. A link 106 may be provided for exchanging information between the mobile communication device 201 and computer 117 connected to the wireless connector system 120. The link 106 may comprise one or both of a physical interface and short-range wireless communication interface. The physical interface may comprise one or combinations of an Ethernet connection, Universal Serial Bus (USB) connection, Firewire™ (also known as an IEEE 1394 interface) connection, or other serial data connection, via respective ports or interfaces of the mobile communication device 201 and computer 117. The short-range wireless communication interface may be a personal area network (PAN) interface. A personal area network is a wireless point-to-point connection meaning no physical cables are required to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the Bluetooth™ special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communication devices 201. The teachings of the present disclosure may be employed in connection with any other type of network and associated devices that are effective in implementing or facilitating wireless communication. Suitable variations of the communication system will be understood to a person of skill in the art and are intended to fall within the scope of the present disclosure.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

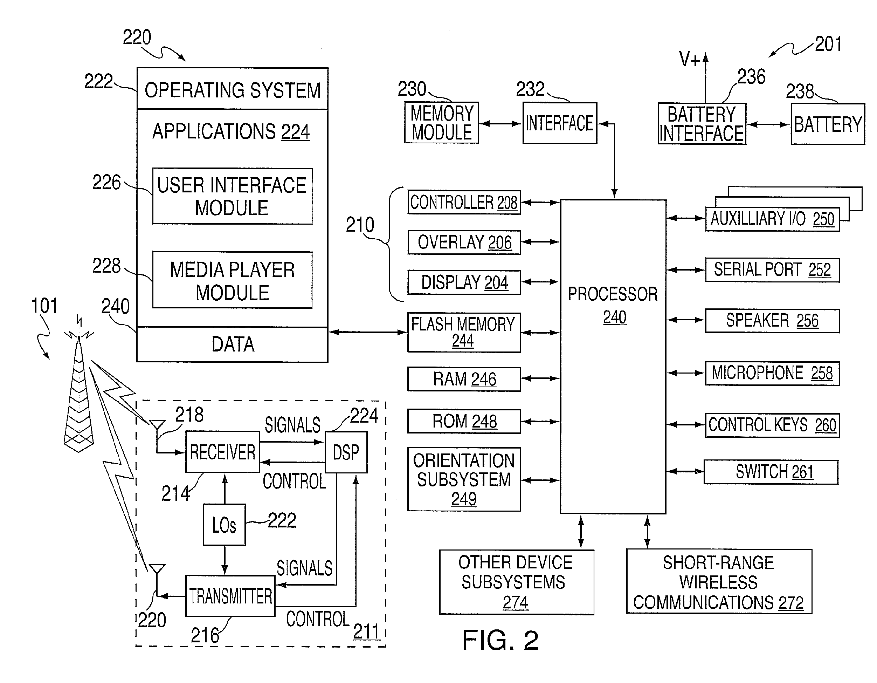

Reference is now made to FIG. 2, which illustrates a mobile communication device 201 in which example embodiments described in the present disclosure can be applied. The mobile communication device 201 is a two-way communication device having at least data and possibly also voice communication capabilities, and the capability to communicate with other computer systems, for example, via the Internet. Depending on the functionality provided by the mobile communication device 201, in various embodiments the device may be a data communication device, a multiple-mode communication device configured for both data and voice communication, a smartphone, a mobile telephone or a PDA (personal digital assistant) enabled for wireless communication, or a computer system with a wireless modem.

The mobile communication device 201 includes a controller comprising at least one processor 240 such as a microprocessor which controls the overall operation of the mobile communication device 201, and a wireless communication subsystem 211 for exchanging radio frequency signals with the wireless network 101. The processor 240 interacts with the communication subsystem 211 which performs communication functions. The processor 240 interacts with additional device subsystems including a display (screen) 204, such as a liquid crystal display (LCD) screen, with a touch-sensitive input surface or overlay 206 connected to an electronic controller 208 that together make up a touch-screen display 210. The touch-sensitive overlay 206 and the electronic controller 208 provide a touch-sensitive input device and the processor 240 interacts with the touch-sensitive overlay 206 via the electronic controller 208.

The processor 240 interacts with additional device subsystems including flash memory 244, random access memory (RAM) 246, read only memory (ROM) 248, auxiliary input/output (I/O) subsystems 250, data port 252 such as serial data port, such as a Universal Serial Bus (USB) data port, speaker 256, microphone 258, control keys 260, switch 261, short-range communication subsystem 272, and other device subsystems generally designated as 274. Some of the subsystems shown in FIG. 2 perform communication-related functions, whereas other subsystems may provide "resident" or on-device functions.

The communication subsystem 211 includes a receiver 214, a transmitter 216, and associated components, such as one or more antenna elements 218 and 221, local oscillators (LOs) 222, and a processing module such as a digital signal processor (DSP) 224. The antenna elements 218 and 221 may be embedded or internal to the mobile communication device 201 and a single antenna may be shared by both receiver and transmitter, as is known in the art. As will be apparent to those skilled in the field of communication, the particular design of the wireless communication subsystem 221 depends on the wireless network 101 in which mobile communication device 201 is intended to operate.

The mobile communication device 201 may communicate with any one of a plurality of fixed transceiver base stations 108 of the wireless network 101 within its geographic coverage area. The mobile communication device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 224. In a similar manner, signals to be transmitted are processed, including modulation and encoding, for example, by the DSP 224. These DSP-processed signals are input to the transmitter 216 for digital-to-analog (D/A) conversion, frequency up conversion, filtering, amplification, and transmission to the wireless network 101 via the antenna 221. The DSP 224 not only processes communication signals, but may also provide for receiver and transmitter control. For example, the gains applied to communication signals in the receiver 214 and the transmitter 216 may be adaptively controlled through automatic gain control algorithms implemented in the DSP 224.

The processor 240 operates under stored program control and executes software modules 220 stored in memory such as persistent memory, for example, in the flash memory 244. As illustrated in FIG. 2, the software modules 220 comprise operating system software 222, software applications 224 comprising a user interface module 226, and a media player module 228 for providing a media player application. The user interface module 226 renders and displays the GUI of the device 201 in accordance with instructions of the operating system 222 and applications 224 (as applicable).

The modules 226, 228 may, among other things, each be implemented through stand-alone software applications, or combined together in one or more of the operating system 222 and applications 224. In some example embodiments, the functions performed by each of the above identified modules 226, 228 may be realized as a plurality of independent elements, rather than a single integrated element, and any one or more of these elements may be implemented as parts of other software applications.

Those skilled in the art will appreciate that the software modules 220 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

The software applications 224 may include a range of applications, including, for example, an address book application, a messaging application (i.e., SMS, MMS, and in the case of the present disclosure, a RCS/RCSe suite), a calendar application, and/or a notepad application. In some embodiments, the software applications 224 include an email message application, a push content viewing application, a voice communication (i.e. telephony) application, a map application, and a media player application. Each of the software applications 224 may include layout information defining the placement of particular fields and graphic elements (e.g. text fields, input fields, icons, etc.) in the user interface (i.e. the display device 204) according to the application. As described further below with particular reference to illustrative embodiments, the applications (or modules) are so configured to enable enhanced messaging functionality from either an in-call or call log UI. Such programming can be implemented by those skilled in the art based on the teachings herein.

In some embodiments, the auxiliary input/output (I/O) subsystems 250 may comprise an external communication link or interface, for example, an Ethernet connection. The mobile communication device 201 may comprise other wireless communication interfaces for communicating with other types of wireless networks, for example, a wireless network such as an orthogonal frequency division multiplexed (OFDM) network or a GPS transceiver for communicating with a GPS satellite network (not shown). The auxiliary I/O subsystems 250 may comprise a vibrator for providing vibratory notifications in response to various events on the mobile communication device 201 such as receipt of an electronic communication or incoming phone call, or for other purposes such as haptic feedback (touch feedback).

In some embodiments, the mobile communication device 201 also includes a removable memory card 230 (typically comprising flash memory) and a memory card interface 232. Network access typically associated with a subscriber or user of the mobile communication device 201 via the memory card 230, which may be a Subscriber Identity Module (SIM) card for use in a GSM network or other type of memory card for use in the relevant wireless network type. The memory card 230 is inserted in or connected to the memory card interface 232 of the mobile communication device 201 in order to operate in conjunction with the wireless network 101.

The mobile communication device 201 stores data 240 in an erasable persistent memory, which in one example embodiment is the flash memory 244. In various embodiments, the data 240 includes service data comprising information required by the mobile communication device 201 to establish and maintain communication with the wireless network 101. The data 240 may also include user application data such as email messages, address book and contact information, calendar and schedule information, notepad documents, image files, and other commonly stored user information stored on the mobile communication device 201 by its user, and other data. The data 240 stored in the persistent memory (e.g. flash memory 244) of the mobile communication device 201 may be organized, at least partially, into a number of databases each containing data items of the same data type or associated with the same application. For example, email messages, contact records, and task items may be stored in individual databases within the device memory.

The serial data port 252 may be used for synchronization with a user's host computer system (not shown). The serial data port 252 enables a user to set preferences through an external device or software application and extends the capabilities of the mobile communication device 201 by providing for information or software downloads to the mobile communication device 201 other than through the wireless network 101. The alternate download path may, for example, be used to load an encryption key onto the mobile communication device 201 through a direct, reliable and trusted connection to thereby provide secure device communication.

In some embodiments, the mobile communication device 201 is provided with a service routing application programming interface (API) which provides an application with the ability to route traffic through a serial data (i.e., USB) or Bluetooth® (Bluetooth® is a registered trademark of Bluetooth SIG, Inc.) connection to the host computer system using standard connectivity protocols. When a user connects their mobile communication device 201 to the host computer system via a USB cable or Bluetooth® connection, traffic that was destined for the wireless network 101 is automatically routed to the mobile communication device 201 using the USB cable or Bluetooth® connection. Similarly, any traffic destined for the wireless network 101 is automatically sent over the USB cable Bluetooth® connection to the host computer system for processing.

The mobile communication device 201 also includes a battery 238 as a power source, which is typically one or more rechargeable batteries that may be charged, for example, through charging circuitry coupled to a battery interface such as the serial data port 252. The battery 238 provides electrical power to at least some of the electrical circuitry in the mobile communication device 201, and the battery interface 236 provides a mechanical and electrical connection for the battery 238. The battery interface 236 is coupled to a regulator (not shown) which provides power V+ to the circuitry of the mobile communication device 201.

The short-range communication subsystem 272 is an additional optional component which provides for communication between the mobile communication device 201 and different systems or devices, which need not necessarily be similar devices. For example, the subsystem 272 may include an infrared device and associated circuits and components, or a wireless bus protocol compliant communication mechanism such as a Bluetooth® communication module to provide for communication with similarly-enabled systems and devices.

A predetermined set of applications that control basic device operations, including data and possibly voice communication applications will normally be installed on the mobile communication device 201 during or after manufacture. Additional applications and/or upgrades to the operating system 221 or software applications 224 may also be loaded onto the mobile communication device 201 through the wireless network 101, the auxiliary I/O subsystem 250, the serial port 252, the short-range communication subsystem 272, or other suitable subsystem 274 other wireless communication interfaces. The downloaded programs or code modules may be permanently installed, for example, written into the program memory (i.e. the flash memory 244), or written into and executed from the RAM 246 for execution by the processor 240 at runtime. Such flexibility in application installation increases the functionality of the mobile communication device 201 and may provide enhanced on-device functions, communication-related functions, or both. For example, secure communication applications may enable electronic commerce functions and other such financial transactions to be performed using the mobile communication device 201.

The mobile communication device 201 may provide two principal modes of communication: a data communication mode and an optional voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email message application and output to the display 242. A user of the mobile communication device 201 may also compose data items, such as email messages, for example, using the touch-sensitive overlay 206 in conjunction with the display device 204 and possibly the control buttons 260 and/or the auxiliary I/O subsystems 250. These composed items may be transmitted through the communication subsystem 211 over the wireless network 101.

In the voice communication mode, the mobile communication device 201 provides telephony functions and operates as a typical cellular phone. The overall operation is similar, except that the received signals would be output to the speaker 256 and signals for transmission would be generated by a transducer such as the microphone 222. The telephony functions are provided by a combination of software/firmware (i.e., the voice communication module) and hardware (i.e., the microphone 222, the speaker 256 and input devices). Alternative voice or audio I/O subsystems, such as a voice message recording subsystem, may also be implemented on the mobile communication device 201. Although voice or audio signal output is typically accomplished primarily through the speaker 256, the display device 204 may also be used to provide an indication of the identity of a calling party, duration of a voice call, or other voice call related information.

The touchscreen display 210 can be any suitable touchscreen display such as a capacitive touchscreen display. A capacitive touchscreen display 210 includes the display device 204 and the touch-sensitive overlay 206, in the form of a capacitive touch-sensitive overlay 206. It will be appreciated that the capacitive touch-sensitive overlay 206 includes a number of layers in a stack and is fixed to the display device 204 via a suitable optically clear adhesive. The layers can include, for example a substrate fixed to the display device 204 (e.g. LCD display) by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

Each of the touch sensor layers comprises an electrode layer each having a number of spaced apart transparent electrodes. The electrodes may be a patterned vapour-deposited ITO layer or ITO elements. The electrodes may be, for example, arranged in an array of spaced apart rows and columns. As shown in FIG.5, the touch sensor layers/electrode layers are each associated with a coordinate (e.g., x or y) in a coordinate system used to map locations on the touchscreen display 210, for example, in Cartesian coordinates (e.g., x and y-axis coordinates). The intersection of the rows and columns of the electrodes may represent pixel elements defined in terms of an (x, y) location value which can form the basis for the coordinate system. Each of the touch sensor layers provide a signal to the controller 208 which represent the respective x and y coordinates of the touchscreen display 210. That is, x locations are provided by a signal generated by one of the touch sensor layers and y locations are provided by a signal generated by the other of the touch sensor layers.

The electrodes in the touch sensor layers/electrode layers respond to changes in the electric field caused by conductive objects in the proximity of the electrodes. When a conductive object is near or contacts the touch-sensitive overlay 206, the object draws away some of the charge of the electrodes and reduces its capacitance. The controller 208 receives signals from the touch sensor layers of the touch-sensitive overlay 206, detects touch events by determining changes in capacitance which exceed a predetermined threshold, and determines the centroid of a contact area defined by electrodes having a change in capacitance which exceeds the predetermined threshold, typically in x, y (Cartesian) coordinates.

The controller 208 sends the centroid of the contact area to the processor 240 of the device 201 as the location of the touch event detected by the touchscreen display 210. Depending on the touch-sensitive overlay 206 and/or configuration of the touchscreen display 210, the change in capacitance which results from the presence of a conductive object near the touch-sensitive overlay 206 but not contact the touch-sensitive overlay 206, may exceed the predetermined threshold in which case the corresponding electrode would be included in the contact area. The detection of the presence of a conductive object such as a user's finger or a conductive stylus is sometimes referred to as finger presence/stylus presence.

It will be appreciated that other attributes of a touch event on the touchscreen display 210 can be determined. For example, the size and the shape (or profile) of the touch event on the touchscreen display 210 can be determined in addition to the location based on the signals received at the controller 208 from the touch sensor layers. For example, the touchscreen display 210 may be used to create a pixel image of the contact area created by a touch event. The pixel image is defined by the pixel elements represented by the intersection of electrodes in the touch sensor layers/electrode layers. The pixel image may be used, for example, to determine a shape or profile of the contact area.

The centroid of the contact area is calculated by the controller 208 based on raw location and magnitude (e.g., capacitance) data obtained from the contact area. The centroid is defined in Cartesian coordinates by the value ($X_c$, $Y_c$). The centroid of the contact area is the weighted averaged of the pixels in the contact area and represents the central coordinate of the contact area. By way of example, the centroid may be found using the following equations:

$$X_c = \frac{\sum_{i=1}^{n} Z_i * x_i}{\sum_{i=1}^{n} Z_i} \qquad (1)$$

$$Y_c = \frac{\sum_{i=1}^{n} Z_i * y_i}{\sum_{i=1}^{n} Z_i} \qquad (2)$$

where $X_c$ represents the x-coordinate of the centroid of the contact area, $Y_c$ represents the y-coordinate of the centroid of the contact area, x represents the x-coordinate of each pixel in the contact area, y represents the y-coordinate of each pixel in the contact area, Z represents the magnitude (capacitance value or resistance) at each pixel in the contact area, the index i represents the electrodes in the contact area and n represents the number of electrodes in the contact area. Other methods of calculating the centroid will be understood to persons skilled in the art.

The controller 208 of the touchscreen display 210 is typically connected using both interpret and serial interface ports to the processor 240. In this way, an interrupt signal which indicates a touch event has been detected, the centroid of the contact area, as well as raw data regarding the location and magnitude of the activated electrodes in the contact area are passed to the processor 240. However, in other example embodiments only an interrupt signal which indicates a touch event has been detected and the centroid of the contact area are passed to the processor 240. In embodiments where the raw data is passed to the processor 240, the detection of a touch event (i.e., the application of an external force to the touch-sensitive overlay 206) and/or the determination of the centroid of the contact area may be performed by the processor 240 of the device 201 rather than the controller 208 of the touchscreen display 210.

In other embodiments, the touchscreen display 210 may be a display device, such as an LCD screen, having the touch-sensitive input surface (overlay) 206 integrated therein. One example of such a touchscreen is described in commonly owned U.S. patent publication no. 2004/0155991, published August 12, 2004 (also identified as U.S. patent application no. 10/717,877, filed November 20, 2003) which is incorporated herein by reference.

While a specific embodiment of the touchscreen display 210 has been described, any suitable type of touchscreen in the handheld electronic device of the present disclosure including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the handheld electronic device and its particular application and demands.

The mobile communication device 201 also comprises a device orientation subsystem 249 comprising at least one orientation sensor which is connected to the processor 240 and which is controlled by one or a combination of a monitoring circuit and operating software. The device orientation subsystem 249 may comprise two or more orientation sensors or an orientation sensor and an electronic compass. The device orientation subsystem 249 detects the orientation of the mobile communication device 201 or detects information which the orientation of the mobile communication device 201 can be determined, such as acceleration using an accelerometer. In other embodiments, an orientation sensor other than an accelerometer could be used, such as a gravity sensor, a gyroscope, a tilt sensor, an electronic compass, or other suitable sensor, or combinations thereof.

As will be appreciated by persons skilled in the art, an accelerometer is a sensor which converts acceleration from motion (e.g. movement of the mobile communication device 201 or a portion thereof due to the strike force) and gravity which are detected by a sensing element into an electrical signal (producing a corresponding change in output) and is available in one, two or three axis configurations. Accelerometers may produce digital or analog output signals depending on the type of accelerometer. Generally, two types of outputs are available depending on whether an analog or digital accelerometer used: (1) an analog output requiring buffering and analog-to-digital (A/D) conversion; and (2) a digital output which is typically available in an industry standard interface such as an SPI (Serial Peripheral Interface) or I2C (Inter-Integrated Circuit) interface. The output of an accelerometer is typically measured in terms of the gravitational acceleration constant at the Earth's surface, denoted g, which is approximately 9.81 m/s$^2$ (32.2 ft/s$^2$) as the standard average. The accelerometer may be of almost any type including, but not limited to, a capacitive, piezoelectric, piezoresistive, or gas-based accelerometer. The range of accelerometers vary up to the thousands of $g$'s, however for portable electronic devices "low-$g$" accelerometers may be used. Example low-$g$ accelerometers which may be used are MEMS digital accelerometers from Analog Devices, Inc. (ADI), Freescale Semiconductor, Inc. (Freescale) and STMicroelectronics N.V. of Geneva, Switzerland.

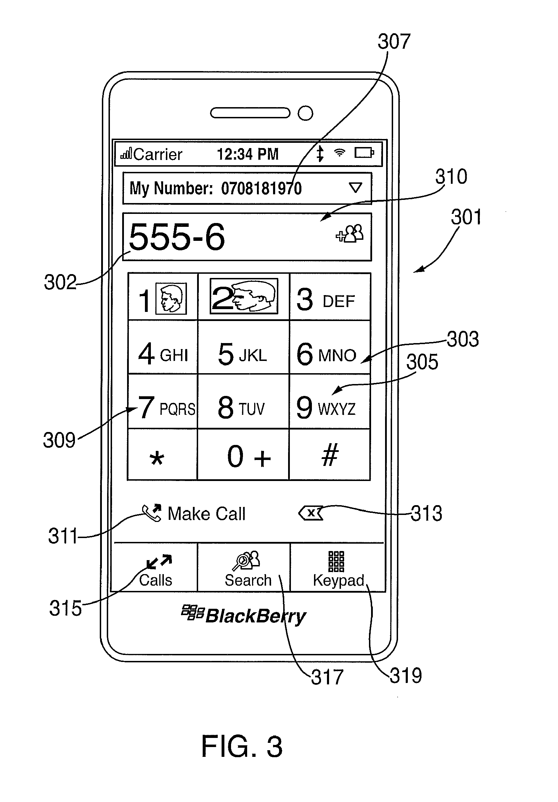

Referring now to Fig. 3, an exemplary mobile communications device 301 is shown, comprising a touch-screen display 310 rendering a UI 303 that presents a virtual (or equivalently, a real) keypad 305. In the example shown, a dialing window 305 is disposed proximal to a number field containing the caller's number 307. This number can be selected by pressing or touching the down arrow from among a plurality of originating numbers such as for example, using the Blackberry® MVS service. The keypad 305 comprises a plurality of keys 309 arranged in a conventional fashion. A call origination button 311 and call terminate button 313 are positioned below the keys as depicted in the drawing; however, any other suitable arrangement may be employed within the scope of the disclosure. Similarly, a call log button 315, contact search button 317 and keypad button 319 (to toggle between the keypad 305 and another in-call or other UI) are disposed in a contiguous relationship near the bottom of the UI 303.

In accordance with one aspect of the disclosure, pictures of contacts identified for implementing a speed dial function may be rendered proximal to or in place of the numerical digits ("virtual buttons") presented on the keypad. In the example shown, a facial picture of the speed-dial contact in position "1" is rendered on the UI next to the numerical digit. By way of further example, a facial picture of the speed-dial contact in position "2" is rendered on the UI but in this instance with the numerical digit 2 overlaid upon the picture. If a user presses and holds a button without a picture, the system can be configured to prompt the user via a message, i.e., "do you want to add a speed dial contact," and then render an option for the user to choose a contact and picture from a contact list. The picture may be selected from the contact list, or obtained from another location by navigating to the same, either in memory associated with the mobile device, or from another linked/networked device.

In another embodiment the picture of the contact may be processed so as to provide a smooth screen transition to a dial or call-in-progress screen, for example, by expanding the image in size and location to fit the dial/call-in-progress screen. In an alternative embodiment, multiple screen dial contacts may be assigned to each number and, responsive to user selection, an option to choose one of the images associated with each number is provided so as to enable a plurality of contacts to be assigned to each speed dial number, thereby expanding the options.

In yet another expedient, a user can capture an image of a friend or target and the mobile device will execute a photo recognition application and look for a contact number matching the subject in the photo. The device can automatically dial the contact or prompt the user to dial the subject from the user interface.

In yet another embodiment, a user can drag and drop the dial buttons (pictures/numbers) from one location to another location on the display screen. For example, if a friend moves up or down in speed dial priority, then when a speed dial button is dropped in the same location as another speed dial entry, the buttons are either swapped or multiple speed dial entries per button are associated. The user can "throw" a speed dial button off the screen to discard and replace it with a button containing a number only. In a further implementation, additional overlays may be added/rendered on top of speed dial images. For example, a mail or messaging (shortcut) icon can be be displayed when the user has new mail from the contact associated with the speed dial, or if there are any missed calls from that contact. Depressing the mail or messaging symbol will trigger the email/messaging application and the associated UI will be rendered on the display.

By these approaches, it makes it easy for the caller to quickly identify a desired called party by simply viewing a picture, as opposed to having to remember which speed-dial contact is associated with which number on the list. The arrangements shown in Fig. 3 are illustrative expedients, as it is anticipated that similar configurations may be employed with the speed-dial contacts are displayed above, below or in front of the numerical digits, or with the letters associated with each digit of the keypad laid upon the pictures, as will be readily appreciated by those skilled in the art.

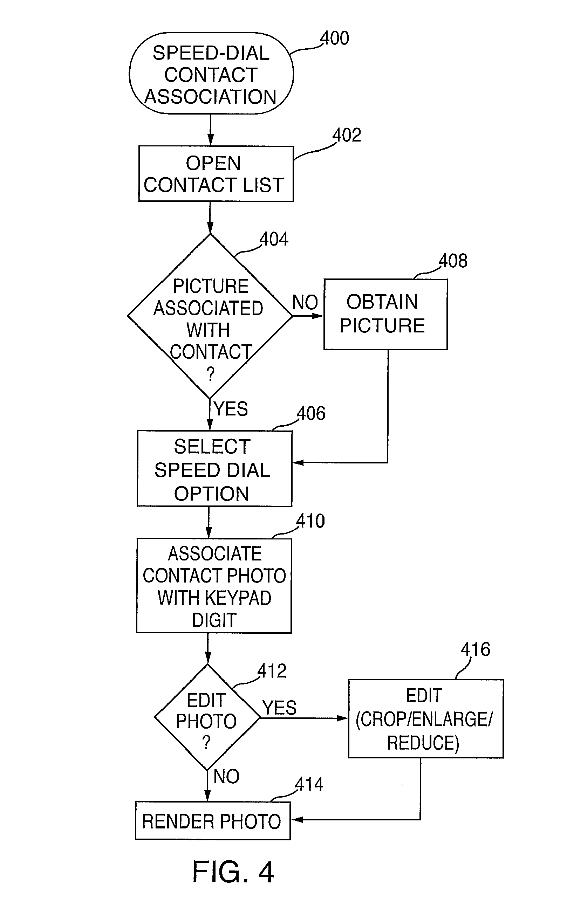

Referring now to Fig. 4, there is depicted a flow diagram of an exemplary speed-dial contact association process 400 in accordance with aspects of the disclosure. By one approach, a user of the communications device first accesses/opens a contact list at block 402. The contact list may be accessed using known methodologies such as pressing a dedicated contact button on the UI, via speech, or depressing a numeric digit on the keypad with a letter corresponding to a contact name(s). If a picture is already associated with a contact at block 404, the process proceeds to block 406. If not, a picture may be obtained at block 408 from any of a variety of sources as described above. At block 410, the contact picture is then associated with desired speed-dial numerical digit on the keypad. The picture may be rendered in any of a plurality of ways as described above with respect to Fig. 3. Block 412 represents an optional edit function to the user via the UI. If the photo requires no edits, it is rendered as shown at block 414. If edits are required, the user can edit the photo (i.e., crop/resize/filter) at block 416 by utilizing known photo-editing techniques. Likewise, the photo can be translated relative to the numerical digits, and/or the digits/letters overlaid upon the photo as shown in Fig. 3.

The various embodiments presented above are merely examples and are in no way meant to limit the scope of this disclosure. Variations of the innovations described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combinations would be readily apparent to persons skilled in the art upon review of the present application as a whole. The subject matter described herein and in the recited items intends to cover and embrace all suitable changes in technology.

Aspects and features of the present disclosure are set out in the following items:

1. A method for speed-dialling a contact on an electronic device, comprising:

   rendering a photo associated with a contact on a display of the device to enable speed-dial selection of the contact; and
   in response to selection of the contact, dialling the contact.

2. The method of item 1, wherein the keypad is a virtual keypad rendered on a graphical user interface (UI).

3. The method of item 2, wherein the photo is disposed next to a numerical digit of the keypad.

4. The method of item 3, wherein the photo is presented on the keypad with a rendered numerical digit overlaid on the photo.

5. The method of item 4, further comprising rendering at least one letter associated with the numerical digit over the photo.

6. The method of item 5, further comprising the step of editing the photo.

7. The method of item 6, further comprising one of cropping and resizing the photo.

8. The method of item 2, further comprising the steps of:

   in response to selection of a numerical digit of the keypad for a period of time, generating a prompt for a user to select a speed-dial contact.

9. The method of item 8, wherein responsive to the prompt, rendering a user interface for selecting the contact photo.

10. The method of item 1, further comprising resizing the contact photo in a screen transition to a dial screen in response to selection of the contact.

11. The method of item 2, further comprising rendering a plurality of contact photos on the virtual keypad in association with each numerical digit.

12. The method of item 2, further comprising, responsive to a gesture, at least one of dragging and dropping at least one of numerical digits and photos on the keypad.

13. The method of item 12, further comprising, responsive to a gesture, discarding a speed-dial contact by moving at least one of the numerical digit and contact photo out of a boundary of the keypad.

14. The method of item 2, further comprising rendering short-cut icons on the keypad for accessing at least one of non-voice communications and missed calls associated with a speed-dial contact.

15. A communications device, comprising:

at least one processor configured for presenting a speed-dial contact on a display of the electronic device by rendering a photo associated with the contact on a keypad for speed-dial selection of the contact; and
in response to selection of the contact, dialling the contact.

16. The communications device of item 15, wherein the keypad is a virtual keypad rendered on a graphical UI.

17. The communications device of item 16, wherein the photo is disposed next to a numerical digit of the keypad.

18. The communications device of item 15, wherein the photo is presented on the keypad with a rendered numerical digit overlaid on the photo.

19. The communications device of item 18, further comprising rendering at least one letter associated with the numerical digit over the photo.

20. The communications device of item 19, further comprising the step of editing the photo.

21. The communications device of item 20, further comprising one of cropping and resizing the photo.

22. The device of item 16, further comprising:

in response to selection of a numerical digit of the keypad for a period of time, generating a prompt for a user to select a speed-dial contact.

23. The device of item 22, wherein responsive to the prompt, rendering a user interface for selecting the contact photo.

24. The device of item 15, further comprising resizing the contact photo in a screen transition to a dial screen in response to selection of the contact.

25. The method of item 15, further comprising rendering a plurality of contact photos on the virtual keypad in association with each numerical digit.

26. The method of item 15, further comprising, responsive to a gesture, at least one of dragging and dropping at least one of numerical digits and photos on the keypad.

27. The method of item 26, further comprising, responsive to a gesture, discarding a speed-dial contact by moving at least one of the numerical digit and contact photo out of a boundary of the keypad.

28. The method of item 16, further comprising rendering short-cut icons on the keypad for accessing at least one of non-voice communications and missed calls associated with a speed-dial contact.

**Claims**

1. A method for speed-dialling a contact on an electronic device, comprising:

rendering a photo associated with a contact on a display of the device to enable speed-dial selection of the contact; and
in response to selection of the contact, dialling the contact.

2. The method of claim 1, wherein the keypad is a virtual keypad rendered on a graphical user interface (UI).

3. The method of claim 2, wherein the photo is disposed next to a numerical digit of the keypad; and preferably wherein the photo is presented on the keypad with a rendered numerical digit overlaid on the photo; and preferably further comprising rendering at least one letter associated with the numerical digit over the photo; and preferably further comprising the step of editing the photo; and preferably further comprising one of cropping and resizing the photo.

4. The method of claim 2, further comprising the steps of:

in response to selection of a numerical digit of the keypad for a period of time, generating a prompt for a user to select a speed-dial contact; and preferably wherein responsive to the prompt, rendering a user interface for selecting the contact photo.

5. The method of claim 1, further comprising resizing the contact photo in a screen transition to a dial screen in response to selection of the contact.

6. The method of claim 2, further comprising rendering a plurality of contact photos on the virtual keypad in association with each numerical digit; or further comprising, responsive to a gesture, at least one of dragging and dropping at least one of numerical digits and photos on the keypad; and preferably further comprising, responsive to a gesture, discarding a speed-dial contact by moving at least one of the numerical digit and contact photo out of a boundary of the keypad.

7. The method of claim 2, further comprising rendering short-cut icons on the keypad for accessing at least one of non-voice communications and missed calls associated with a speed-dial contact.

8. A communications device, comprising:

at least one processor configured for presenting a speed-dial contact on a display of the electronic device by rendering a photo associated with the contact on a keypad for speed-dial selection of the contact; and in response to selection of the contact, dialling the contact.

9. The communications device of claim 8, wherein the keypad is a virtual keypad rendered on a graphical UI.

10. The communications device of claim 9, wherein the photo is disposed next to a numerical digit of the keypad.

11. The communications device of claim 8, wherein the photo is presented on the keypad with a rendered numerical digit overlaid on the photo;
and preferably further comprising rendering at least one letter associated with the numerical digit over the photo; and preferably further comprising the step of editing the photo; and preferably further comprising one of cropping and resizing the photo.

12. The device of claim 9, further comprising:

in response to selection of a numerical digit of the keypad for a period of time, generating a prompt for a user to select a speed-dial contact.

13. The device of claim 12, wherein responsive to the prompt, rendering a user interface for selecting the contact photo.

14. The device of claim 8, further comprising resizing the contact photo in a screen transition to a dial screen in response to selection of the contact; or further comprising rendering a plurality of contact photos on the virtual keypad in association with each numerical digit.

15. The method of claim 8, further comprising, responsive to a gesture, at least one of dragging and dropping at least one of numerical digits and photos on the keypad; and preferably further comprising, responsive to a gesture, discarding a speed-dial contact by moving at least one of the numerical digit and contact photo out of a boundary of the keypad.

16. The method of claim 9, further comprising rendering short-cut icons on the keypad for accessing at least one of non-voice communications and missed calls associated with a speed-dial contact.

FIG. 1

FIG. 2

EP 2 731 317 A1

FIG. 3

**FIG. 4**

Europäisches
Patentamt

European
Patent Office

Office européen
des brevets

## EUROPEAN SEARCH REPORT

Application Number

EP 12 19 2482

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 983 718 B1 (ROKA PUJAN K [US]) 19 July 2011 (2011-07-19) * abstract * * column 1, line 44 - column 3, paragraph 47; figures 1-8 * ----- | 1-16 | INV. H04M1/2745 |
| X | US 2009/063967 A1 (LEE DONG UK [KR] ET AL) 5 March 2009 (2009-03-05) * abstract * * paragraph [0074] - paragraph [0080]; figure 9 * ----- | 1,8 | |

TECHNICAL FIELDS
SEARCHED      (IPC)

H04M

The present search report has been drawn up for all claims

| Place of search | Date of completion of the search | Examiner |
|---|---|---|
| Munich | 22 May 2013 | Liebhart, Manfred |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 19 2482

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2013

| Patent document cited in search report | | Publication date | Patent family member(s) | | Publication date |
|---|---|---|---|---|---|
| US 7983718 | B1 | 19-07-2011 | NONE | | |
| US 2009063967 | A1 | 05-03-2009 | KR | 20090024542 A | 09-03-2009 |
| | | | US | 2009063967 A1 | 05-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040155991 A
- US 71787703 A